(19) **Europäisches Patentamt European Patent Office Office européen des brevets**

(11) **EP 4 538 632 A1**

(12) **EUROPEAN PATENT APPLICATION**

(43) Date of publication:
16.04.2025 Bulletin 2025/16

(21) Application number: 23203669.9

(22) Date of filing: 13.10.2023

(51) International Patent Classification (IPC):
**G01B 9/02015** (2022.01)  **G01B 9/02** (2022.01)
**G01B 11/24** (2006.01)

(52) Cooperative Patent Classification (CPC):
**G01B 11/2441; G01B 9/02024; G01B 9/02032;
G01B 9/02084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Technische Universität Graz
8010 Graz (AT)**

(72) Inventors:
• **Planchette, Carole
8055 Graz (AT)**
• **Plohl, Gregor
2212 Sentilj (SI)**

(74) Representative: **KLIMENT & HENHAPEL
Patentanwälte OG
Gonzagagasse 15/2
1010 Wien (AT)**

(54) **METHOD AND DEVICE FOR DETERMINING DEFLECTIONS OF A FLUID INTERFACE**

(57) Method for determining deflections of a fluid interface (1), the method comprising the following steps:
a) producing a fringe pattern (2) by interference of two coherent beams, wherein the two beams are an object beam (3) and a reference beam (4), wherein, the object beam passes through the fluid interface or is reflected by the fluid interface before the two beams interfere, wherein the reference beam remains unaffected by the fluid interface;
b) digitally recording the fringe pattern by an imaging system (5) focussing on the fluid interface;

c) calculating a wrapped phase image (8) by applying a FFT analysis, with filtering the recorded fringe pattern by transforming the recorded fringe pattern into frequency space, selecting a frequency region (21) around a carrying frequency corresponding to a fringe period in the fringe pattern, and transforming the selected frequency region back into real space;
d) unwrapping the wrapped phase image, yielding a phase image (9);
e) subtracting from the phase image a reference phase image, yielding a relative phase image.

Fig. 1

EP 4 538 632 A1

**Description**

FIELD OF THE INVENTION

The present invention relates to a method for determining deflections of a fluid interface between fluid media with two different refractive indices n1, n2.

Moreover, the present invention relates to a device for carrying out the method according to the invention.

STATE OF THE ART

Deflections of a fluid interface can be caused for example by waves due to vibrations, by drop impacts and bursting bubbles, or by capillary adsorbed particles, the latter typically being solid and having sub-millimetre dimensions. The quasiirreversible adsorption originates a significant surface energy reduction and causes - via associated interfacial disturbances - a local modification of the energy landscape. The latter gives rise to capillary lateral interactions, which are in turn responsible for a self-assembling ability of the particles and for the cohesion of the resulting assemblies.

The assembly cohesion and assembling geometry have since long been attributed to the lateral capillary attractions mediated by the deformation of the interface around the particles. Thus, much effort has been dedicated to the investigation of this deformation, these efforts having been further motivated by the perspective to design self-assembling systems.

Yet, despite the mentioned strong interests and substantial efforts, the interfacial distortions, particularly interfacial distortions produced by capillary adsorbed particles and/or the force developing between them, remain poorly described and understood. The lack of knowledge is especially severe when dynamic regimes are at stake.

One known approach for imaging of an interface around capillary adsorbed particles was presented by Loudet et al. [Loudet, J. C., Yodh, A. G. & Pouligny, B., "Wetting and contact lines of micrometre-sized ellipsoids", Phys. Rev. Lett. 97, 018304 (2006)], using a Michelson interferometer capable of measuring optical path differences caused by interfacial deflections. In this arrangement, successive bright (dark) fringes correspond to variations of about half of the wavelength $\lambda$ of the used laser light ($\lambda$ = 632.8nm). The deflections produced by isolated colloidal particles being sub-micrometric, a piezo-driven phase shifting had to be added to reach sufficient spatial resolution. The phase scanning, however, requires some time during which the Brownian movements of the particles have to be stopped, i.e. dynamics is not accessible.

One known approach to measure interfacial dynamics is called synthetic Schlieren [Moisy, F., Rabaud, M. & Salsac, K., "A synthetic Schlieren method for the measurement of the topography of a liquid interface", Exp. Fluids 46, 1021-1036 (2009)], which provides the instantaneous interfacial shape. However, a drawback of this method is its limited resolution which is at best micrometric.

OBJECTIVE OF THE INVENTION

Hence, it is the objective to provide a method for determining deflections of a fluid interface that avoids the above-mentioned disadvantages. Particularly, the method shall provide a high spatial resolution and simultaneously shall allow for measuring dynamical processes.

SUMMARY OF THE INVENTION

The underlying idea of the present invention is to use heterodyne interferometry, wherein deviations from a reference state are analysed by looking only at the modulations of the signal around a carrying frequency. More specifically, height variations building at a fluid interface are imprinted into a regularly modulated pattern present in the absence of deflections. This allows for decoupling low frequency noise and for resolving phase differences associated with the height deflections to a fraction (e.g. one percent) of $2\pi$. In doing so, resolutions and dynamic ranges are provided going well beyond any state-of-the-art techniques. Accordingly, in order to solve the above-mentioned problems, according to the invention a method for determining deflections of a fluid interface between fluid media with two different refractive indices n1, n2, is provided, the method comprising the following steps:

   a) producing a fringe pattern by interference of two coherent beams, wherein the two beams are an object beam and a reference beam, wherein, in a transmission geometry, the object beam passes through the fluid interface or, in a reflexion geometry, is reflected by the fluid interface before the two beams interfere, wherein the reference beam remains unaffected by the fluid interface;
   b) digitally recording the fringe pattern by an imaging system focussing on the fluid interface;
   c) calculating a wrapped phase image by applying a Fast Fourier Transform (FFT) analysis, wherein the FFT analysis comprises filtering the recorded fringe pattern by transforming the recorded fringe pattern into frequency space, selecting a frequency region around a carrying frequency corresponding to a fringe period in the fringe pattern, and transforming the selected frequency region back into real space;

d) unwrapping the wrapped phase image, particularly by applying a Discrete Cosine Transform (DCT) analysis, yielding a phase image;

e) subtracting from the phase image a reference phase image, yielding a relative phase image with phase differences $d\varphi$.

This means that any time-consuming phase scanning is avoided and, hence, the dynamics of the fluid interface deflections is accessible. Accordingly, corresponding phase-scanning means, particularly a piezo drive for phase-scanning, are avoided as well, which contributes to a stable and economic set-up.

The fluid media are at least partially transparent, preferably essentially transparent, for the object beam. For example, the media can be water and air, providing a water-air interface as fluid interface, wherein, for visible light, the refractive index of air is approx. 1 and the refractive index of water is approx. 1.333.

The two-dimensional fringe pattern recorded in real space, i.e. intensity vs. real-space co-ordinates, is called an interferogram. This interferogram is a modulated carrying pattern, wherein the modulation is due to the deflections of the fluid interface, which deflections can be caused, for example, by a capillary adsorbed particle. The measured interferogram is evaluated around the main frequency, the carrying frequency, of the fringe pattern, which is imprinted via the optical interference of the coherent beams.

While it is clear that in practice there is no perfectly coherent light source available, "coherent" means that the beams are able to interfere, i.e. their coherence is sufficient for generating the interference producing the fringe pattern. This condition can be routinely fulfilled by a variety of light sources, including laser sources.

As noted, the fringe patterns can be recorded both in transmission geometry, with the object beam passing through the fluid interface, and in reflexion geometry, with the object beam being reflected by the fluid interface. The other beam, which is referred to as reference beam, remains unaffected by the fluid interface.

Digitally recording of the fringe pattern yields a two-dimensional (2D) image consisting of a certain number of pixels, enabling further processing by computer algorithms. For said recording, the image system comprises a suitable 2D detector, which is known per se and which can be a digital camera, for example. Generally, depending on the computer algorithm actually applied, said image can be brought in suitable form, e.g. can be expanded/padded for obtaining a side length of $2^n$ pixels for facilitating the application of a Fast Fourier Transform (FFT) algorithm, with n being an integer number.

Notably, by focussing on the fluid interface any particle on the imaged/investigated part of the fluid interface, which is distorting the fluid interface, is imaged as well and is thus seen/visible in the fringe pattern. Accordingly, the dynamics of both the fluid interface deflections and of the respective particle(s) that cause the deflections and carry out Brownian motion, for example, can be visualised. Typically, the image system comprises a lens system with at least one lens for allowing said focussing, wherein said lens system can be integrated into the detector.

The periodicity of the fringes, which corresponds to the carrying frequency, allows the use of the FFT analysis, wherein for the actual transform into frequency space theoretically also other transforms than FFT could be used. The wrapped phase image shows the distribution of phase differences between the two beams, wherein the phase data is modulo $2\pi$.

As mentioned above, only the modulations or disturbances of the carrying frequency are of interest and thus kept. Accordingly, the frequency region is selected around the carrying frequency of the regular fringes and other frequency noise is eliminated in that all spatial frequencies found outside the selected region are filtered out.

Suitable algorithms for doing the unwrapping are known per se, e.g. the fast discrete cosine transform or, more generally, discrete wavelet transforms.

For carrying out the mentioned FFT analysis of step c) as well as for carrying out the unwrapping of step d) known software packages are available, like "IDEA - Interferometric Data Evaluation Algorithms", c.f. https://www.optics.tugraz.at/idea/idea.html and Hipp, M., Woisetschlager, J., Reiterer, P., & Neger, T., "Digital evaluation of interferograms", Measurement 36 (1), 53-66 (2004).

The resulting relative phase image contains the phase shift distribution caused solely by the fluid interface deflections relative to a situation corresponding to the reference phase image, all other factors being eliminated by the subtraction of the reference phase image. This means that the pixels of the relative phase image contain phase shifts or phase differences $d\varphi$.

Theoretically, it is possible to use a simulated/computed phase image as reference phase image, which simulated/computed phase image corresponds to a phase image obtained from a fringe pattern recorded with the fluid interface being in an undisturbed state. In said undisturbed state deflections - and particles causing deflections - of the fluid interface are absent.

In principle, for obtaining a reference phase image it is even possible to use a measurement of the fringe pattern with the fluid interface being in a disturbed state, yielding the phase distribution of the disturbed interface only. Indeed, as one expects an undisturbed liquid interface to be perfectly planar, one can remove any arbitrary tilt from the phase image, in order to bring it to zero far away from the disturbances. This means calculating the plane that best fits a selection of points made at the periphery of the image (far from the particles) and subtracting it (as reference phase image) from the phase image.

In a preferred embodiment of the method according to the present invention, it is provided that the reference phase image is another phase image obtained from a fringe pattern recorded at another time or is a phase image obtained from a fringe pattern recorded with the fluid interface being in an undisturbed state. If the reference phase image is another phase image obtained from a fringe pattern recorded at another time, the relative phase image refers to the changes of the deflections of the fluid interface between the corresponding points in time, which can be very close if fast dynamics is determined. Said changes can be caused, for example by a capillary adsorbed particle which is moving on the fluid interface or by capillary waves travelling at the fluid interface.

If the reference phase image is a phase image obtained from a fringe pattern recorded with the fluid interface being in an undisturbed state, the relative phase image refers to the deflections of the fluid interface due to any disturbances compared to the undisturbed state, e.g. due to one or more capillary adsorbed particles on the fluid interface.

It is noted that in both mentioned cases of "real" or simulated reference phase images for the undisturbed state, it is possible that the obtained phase shift slightly deviates from the one the system should have at the instant of measurements. This can be caused by some vibrations in the system, some variations in the temperature field and thus variations of the refractive indices, etc. This effect, which can be easily identified by the presence of a slight linear tilt between the two interfaces (at rest and with deflections), can also easily be corrected for by subtracting said linear tilt.

If one or more particles that cause the fluid interface deflections are imaged in the fringe pattern, the particles cover certain parts of the interface and those parts of the image cannot be exploited. In other words, in those parts the interference pattern cannot be interpreted because of the, in general, different and unknown optical paths there. Generally, the fringe pattern does not show any fringes in those parts. Instead, shadow-like areas indicate the respective particle located on the imaged area of the fluid interface. To account for those parts, in a preferred embodiment of the method according to the present invention, it is provided that if one or more non-exploitable parts are present in the phase image, the one or more non-exploitable parts are masked in the phase image and in the reference phase image before step e). This masking step can be done manually or using an image acquired in the absence of fringes, which can be thresholded, e.g. against a grey value, to define the exact shape of the mask.

The above does not exclude that masking is already done before the phase image is calculated, wherein the mask can be applied not only to the wrapped phase image, but even already to the recorded fringe pattern - before processing both the actually measured fringe pattern and a fringe pattern simulated or measured for obtaining the reference phase image. In other words, masking can be done between steps b) and e), i.e. after step b) and before step e).

The relative phase image as such provides for a qualitative assessment and visualisation of the deflections or deflection changes without absolute height numbers. However, "determining" comprises not only said qualitative assessment, but also a quantitative evaluation or measurement of absolute heights. For doing so, the optical path difference associated with the imaged interface has to be taken into account. Therein, a phase difference $d\varphi$ of $2\pi$ corresponds to an optical path difference of $\lambda$, the used wavelength, which enables converting the phase differences $d\varphi$ into height deflections. Accordingly, in a preferred embodiment of the method according to the present invention, it is provided that a height variations map is calculated from the relative phase image by calculating for each pixel a height deflection as $dl\_trans = (\lambda\, d\varphi)/(2\pi\,(n2-n1))$ for transmission geometry or as $dl\_ref = (\lambda\, d\varphi)/(4\pi\,(n2-n1))$ for reflexion geometry, with $\lambda$ being the wavelength of the coherent beams.

For example, using a He-Ne laser with a wavelength of 632.8 nm, one obtains in transmission geometry for a water-air interface with the corresponding refractive indices, cf. above, a height deflection $dl\_trans$ of 1.9 $\mu$m for a phase difference of $2\pi$ (corresponding to one period), which is the conventional resolution of classical interferometry - and, obviously, the resolution of the present method is much better.

With heterodyne interferometry, the uncertainty of the phase difference calculation is a function of the signal/-noise ratio of the FFT (SNR) and is given by $\Delta(d\varphi) = 1/(SNR)^{0.5}\,((SNR)^{0.5} + 1)/((SNR)^{0.5} - 1)$. Here SNR is obtained by dividing the mean signal level of the FFT in the selected frequency region (around the carrier frequency) by the mean noise level taken outside of the frequency window and frequency region, respectively. With the present method, a typical value is SNR=150, and $\Delta(d\varphi) \approx 0.1$ rad. This is roughly 1.5% of $2\pi$ (a fringe), bringing the vertical resolution of the system to about 1.5% of 1900 nm (= $\lambda\, 2\pi/(2\pi\,(n2-n1))$, with $\lambda$=632.8 nm and n2-n1 $\approx 0.333$), i.e. about 30 nm. This can be further improved by using higher fringe frequencies and thus a better filtration of the low frequency noise present in all interferograms.

Thus, a vertical or height resolution in the order of $10^{-8}$ m can typically be achieved with visible light sources.

Generally, the lateral resolution depends on the magnification provided by the imaging system, with the mentioned lens system being designed or chosen properly, and the range of frequencies selected for filtration. Noting D_f the width of the selected frequency region (width and height of the frequency region/window for respectively the x and y directions), the Nyquist theorem gives for the minimal sampling distance $D\_min = 1/(2\,D\_f)$. A typical value with images being 1024 x 1024 pixels is D_f=50 pixel$^{-1}$, which roughly means 50 cycles in 1024 pixels and thus 100 sampling points in 1024 pixels, i.e. a sampling point every 10 pixels approximately and the lateral resolution being roughly 10 pixels.

This means a typical value for the resulting lateral resolution on the fringe pattern of 1 um per pixel provides for a lateral resolution on the (relative) phase image and height variations map, respectively, of 10 um. The lateral resolution can be increased by increasing the sampling frequency, i.e. the spatial frequency of the fringes. The limit of the system is that the fringes remain resolved on the pattern image and do not close on themselves (circular fringes) as it would prevent unwrapping of the modulo $2\pi$ wrapped phase image. Given that usual detectors/cameras have several thousand times several thousand pixels, several square millimetres with a lateral resolution of the order of typically $10^{-5}$ m can be imaged simultaneously.

The vertical resolution and the lateral resolution can be combined with a high dynamic range, which is again determined by the imaging system and is hence at least of the order of kHz when usual high-speed cameras that can record thousands of frames per second are used. The high dynamic range is only needed in presence of unsteady deflections but not for the reference phase image(s) taken on the undisturbed interface at rest.

In order to provide for a convenient way for generating the interference of the two coherent beams as stipulated in step a) known interferometer types can be used. Accordingly, in a preferred embodiment of the method according to the present invention, it is provided that in step a) a Mach-Zehnder-type interferometer or a Michelson-type interferometer is used. Both interferometer types are known per se in many variants and allow for measurements in reflexion or transmission geometry.

In a preferred embodiment of the method according to the present invention, it is provided that the used imaging system comprises a CCD camera. Such cameras based on charge-coupled devices (CCD) are commercially available with several thousand times several thousand pixels, e.g. with 1000 times 2000 pixels, at affordable prices.

Moreover, high-speed versions allow for frame rates of at least 1 kHz.

As already mentioned laser sources can be used for providing the coherent beams, wherein today such laser sources are robust and commercially available at affordable prices. Accordingly, in a preferred embodiment of the method according to the present invention, it is provided that for providing the two coherent beams a laser source with a downstream beam expander is used, followed by a beam splitter. The beam expander, which is known per se and commercially available, widens the beam of the laser source, facilitating the splitting of this beam into the object beam and the reference beam by means of the beam splitter and increasing the interfacial area that can be imaged. Also beam splitters are known per se and are built as semi-transparent mirrors or as cubes made from two triangular glass prisms glued together, for example, c.f. https://en.wikipedia.org/wiki/Beam splitter.

In a preferred embodiment of the method according to the present invention, it is provided that at least one of the fluid media is a liquid which is arranged in a container having a window, through which window the object beam passes before going through the liquid, wherein the window preferably is made of a material and/or comprises a coating adapted for avoiding reflexions of light with a wavelength of the coherent beams. This arrangement allows for a convenient handling of the liquid and the fluid interface to be investigated, respectively.

By choosing e.g. an appropriate glass type or appropriately coated glass as material for the window disturbances in the fringe pattern due to the window-liquid interface (as well as due to the window-air interface plus multiple internal reflexions in the window) are minimised. For example, a window made of glass type BK7 can be used to avoid reflexions of light with a wavelength of about 630 nm.

It is noted that despite said material choice and/or coating parasitic reflexions can be simply eliminated by tilting the window, bringing the undesired reflected beam away from the investigated interference pattern.

On the other hand, said disturbances should not influence the relative phase image, if the reference phase image, which is subtracted according to step e), is obtained from a measurement of the liquid in the same arrangement, because then the reference phase image accounts for those disturbances anyway.

In order to maximise the stability of the liquid in the above-mentioned arrangement, in a particularly preferred embodiment of the method according to the present invention, it is provided that in the container, a ring is arranged around the window for stabilising the liquid. The latter is achieved, since the contact line of the liquid is pinned by the ring at a defined and fixed position. Accordingly, this embodiment is particularly suitable for the determination of deflections of the fluid interface caused by capillary adsorbed particles, since other disturbances of the fluid interface are minimised and long-range capillary interactions of the adsorbed particles direct them toward the centre of the ring, facilitating their optical recording.

As mentioned above, the method according to the present invention allows for determining the dynamics of the deflections of the fluid interface. Accordingly, in a preferred embodiment of the method according to the present invention, it is provided that a time series of fringe patterns is recorded by the imaging system, preferably with a rate in the range of 1000 to 10000 frames per second, wherein for each of those fringe patterns steps c) to e) are carried out, in order to resolve the temporal evolution of the deflections of the fluid interface. Practically this means that kind of movies showing the evolution of the investigated fluid interface with its deflections can be made, with the spatial resolutions noted above.

As to the mentioned frame rates, it is noted that even higher frame rates can be achieved with commercially available cameras, e.g. up to 100 kHz or more, depending on the actual number of pixels.

Analogously to what has been said above, according to the invention a device is provided for carrying out the method according to the invention, the device comprising means for providing the object beam and the reference beam,

the device further comprising means for arranging the fluid media with the fluid interface in the path of the object beam, allowing, in transmission geometry, passing of the object beam through the fluid interface or, in reflexion geometry, reflecting of the object beam by the fluid interface,
the device further comprising the imaging system for digitally recording the fringe pattern while focussing on the fluid interface,
and the device further comprising an evaluation unit for carrying out the steps c), d), and e).

BRIEF DESCRIPTION OF FIGURES

The invention will be explained in closer detail by reference to preferred embodiments, with

Fig. 1        showing a schematic view of first embodiment of a setup and device according to the invention, respectively, with a Mach-Zehnder-type interferometer for carrying out a method for determining deflections of a fluid interface according to the invention

Fig. 2        showing a schematic view of a second embodiment of the set-up and device according to the invention, respectively, with a Michelson-type interferometer for carrying out the method according to the invention

Fig. 3        showing a fringe pattern recorded with the fluid interface being a water-air interface, with a single particle being arranged on the interface and deflecting said interface; linear grey scale

Fig. 4        showing a fringe pattern analogous to Fig. 3, wherein the fluid interface is not deflected; linear grey scale

Fig. 5        showing an image (without interference fringes) of the fluid interface with a single particle arranged on the interface; linear grey scale

Fig. 6        showing a mask referring to a single spherical particle arranged on the fluid interface

Fig. 7        showing a Fourier transform of the fringe pattern of Fig. 3; truncated quad root scale with maximum value for the first order peak (ignoring a high value at the origin)

Fig. 8        showing a wrapped phase image of a frequency region indicated by a dashed square in Fig. 7, with the mask of Fig. 6 being applied; linear grey scale

Fig. 9        showing a phase image obtained by unwrapping the wrapped phase image of Fig. 8; linear grey scale

Fig. 10       showing a height variations map referring to a single spherical particle arranged on the fluid interface; linear grey scale

Fig. 11       showing a height variations map referring to a socalled glass nugget with non-spherical shape arranged on the fluid interface; linear grey scale

Fig. 12       three height variations maps of a time series, illustrating the merging of two 127 $\mu$m spherical, nano coated glass beads on the (water-air) fluid interface; linear grey scale

WAYS FOR CARRYING OUT THE INVENTION

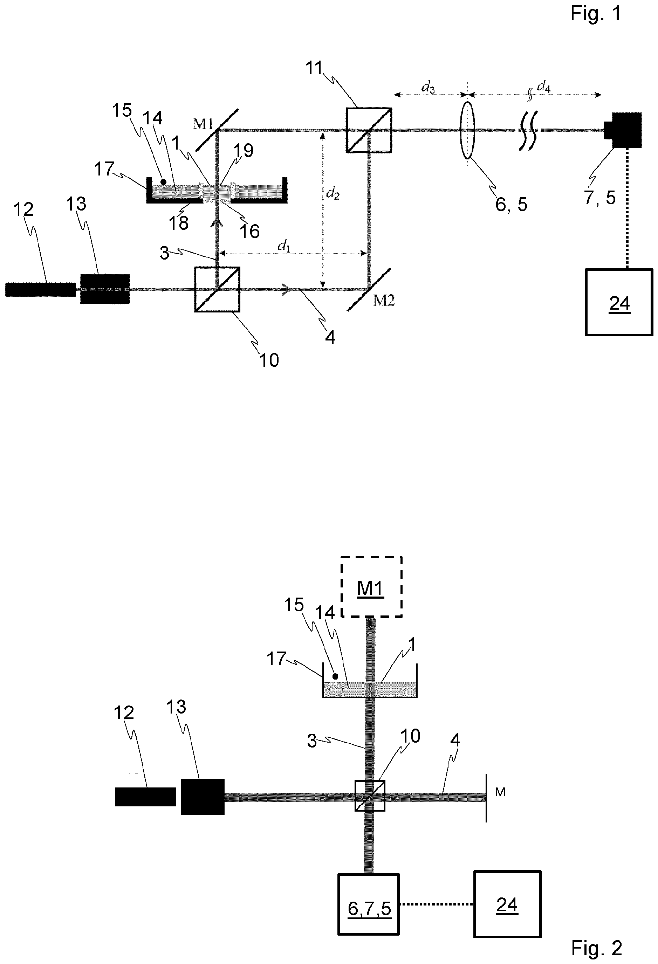

Fig. 1 shows a schematic view of a first embodiment of a set-up and device according to the present invention, respectively, for carrying out a method for determining deflections of a fluid interface 1 between fluid media with two different refractive indices n1, n2 according to the present invention.
In all shown embodiments, the fluid media are air 15, having a refractive index n1 $\approx$ 1, and water 14, having a refractive index n2 $\approx$ 1.333 for visible light with wavelength $\lambda \approx$ 633 nm. This means, the fluid interface 1 is an air-water interface.
In the shown first example the fluid interface 1 is deformed and deflected by one or more small floating adsorbed particles 19.

The device comprises a variation of a Mach-Zehnder double path interferometer for providing two coherent beams 3, 4, namely an object beam 3 and a reference beam 4. For generating the two beams 3, 4 a laser source with a He-Ne laser 12 is provided, which generates light with a wavelength $\lambda \approx 633$ nm. Downstream the He-Ne laser 12 a beam expander 13 is arranged for widening of the laser beam, followed by a cube beam splitter 10, which splits the widened beam into the object beam 3 and the reference beam 4.

The object beam 3 travels through a container 17 typically made of acrylic glass, which container 17 is filled with the water 14. The object beam 3 passes through the fluid interface 1 and is then deflected by a mirror M1. Downstream mirror M1, at a distance $d_1$ from mirror M1, a further cube beam splitter 11 is arranged, in which the object beam 3 is recombined with the reference beam 4, with the reference beam 4 having been deflected by a mirror M2 upstream the further cube beam splitter 11, at a distance $d_2$ from the further cube beam splitter 11, which is also the distance between the cube beam splitter 10 and the mirror M1. Therein, distances $d_1$ and $d_2$ are of the same order of magnitude and typically lie in a range of 2 cm to 100 cm, preferably in a range of 10 cm to 20 cm, e.g. at about 15 cm, but in principle there is no upper limit except that the difference between the two optical paths along the two arms of the empty interferometer should not exceed the coherence length of the employed light source. Hence, the object beam 3, which is affected by the fluid interface 1, and the reference beam 4, which is unaffected by the fluid interface 1, interfere and produce a two-dimensional fringe pattern 2.

This corresponds to the following step a) of the method according to the invention: producing a fringe pattern 2 by interference of two coherent beams 3, 4, wherein the two beams are an object beam 3 and a reference beam 4, wherein, in a transmission geometry, the object beam 3 passes through the fluid interface 1 before the two beams 3, 4 interfere, wherein the reference beam 4 remains unaffected by the fluid interface 1.

For the sake of completeness, it is noted that the set-up of the first embodiment could be adapted to reflexion geometry, in that the fluid interface 1 is used for replacing mirror M1, wherein the inclination of the set-up to the horizontal is matched accordingly. This means, in a reflexion geometry, the object beam 3 is reflected by the fluid interface 1 before the object beams 3 and the reference beam 4 interfere.

For reducing any disturbances of the fringe pattern 2 due to the interface between the container 17 and the water 14, the container 17 has a window 16 made of glass type BK7. For maximising the stability of the water 14 and confining the adsorbed particles 19 in the imaged area a ring 18 is arranged around the window 16, which minimises any disturbances or deflections of the fluid interface 1 apart from those caused by the one or more capillary adsorbed particles 19.

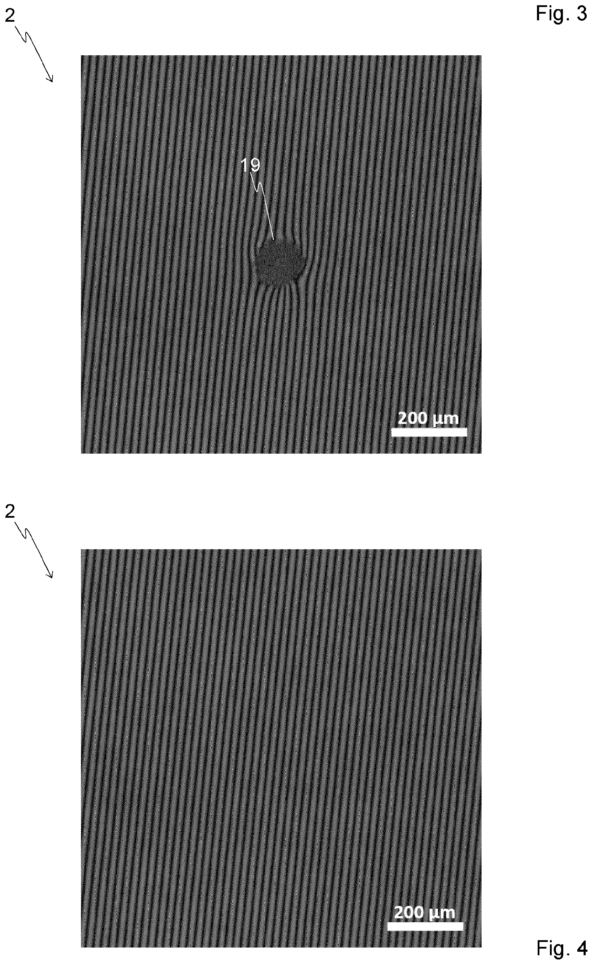

An imaging system 5 is provided for carrying out step b) of the method according to the invention, namely for digitally recording the fringe pattern 2 while focussing on the fluid interface 1. The two-dimensional fringe pattern 2 is recorded in real space, i.e. intensity vs. real-space co-ordinates, and is called an interferogram. This interferogram is a modulated carrying pattern, wherein the modulation is due to the deflections of the fluid interface 1. By focussing on the fluid interface 1 any particle 19 on the imaged/investigated part of the fluid interface 1, which is distorting the fluid interface 1, is imaged as well and is thus seen/visible in the fringe pattern 2. This is illustrated in Fig. 3 showing a fringe pattern 2 recorded with a single particle 19 arranged on the fluid interface 1. In the fringe pattern 2 of Fig. 3 the particle 19 appears like a shadowed region where no fringes are visible.

For comparison, Fig. 4 shows a recorded fringe pattern 2 without any particle 19 and the fluid interface 1 thus being not deflected.

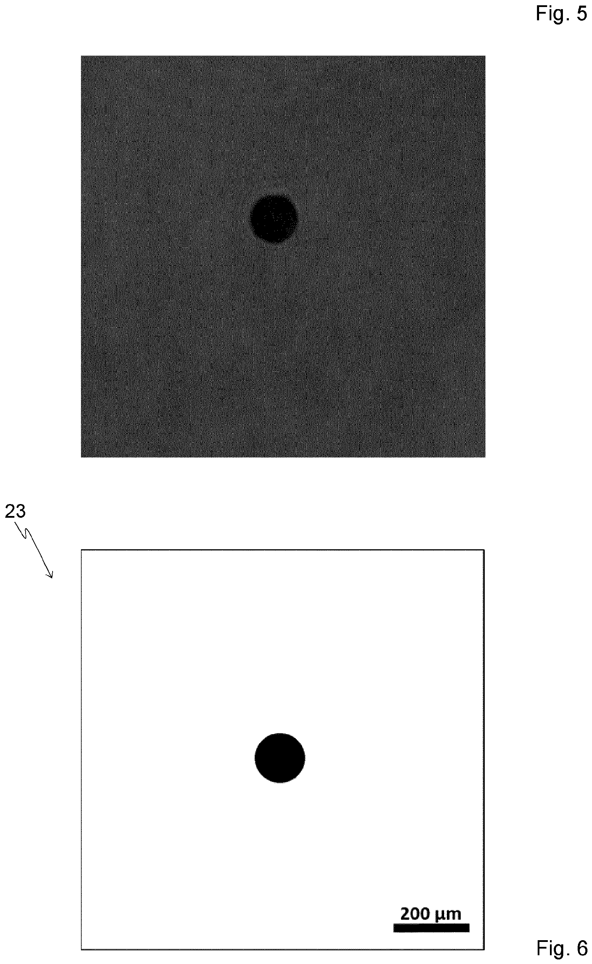

Furthermore, Fig. 5 shows an image of the fluid interface 1 with one particle 19 being arranged on the fluid interface 1, but without interference fringes, which is obtainable, e.g. by removing the reference beam 4, for example by blocking.

In the shown first embodiment the imaging system 5 comprises a CCD (charge-coupled device) camera 7 with 1024 x 1024 pixels (naturally, cameras with other, particularly higher, pixel numbers are available) and a frame rate of several thousand frames per second, typically 3000 frames per second. Furthermore, the imaging system 5 comprises a lens system 6 with at least one lens, which lens system 6 is arranged upstream the CCD camera 7, at a distance $d_4$ from the CCD camera 7 and at a distance $d_3$ from the further cube beam splitter 11. On the one hand, this allows for precisely focussing on the fluid interface 1. On the other hand, a magnification can be chosen, such that the pixels of the CCD camera 7 image a certain area of the fluid interface, e.g. 1 mm x 1 mm or 2 mm x 2 mm.

The distances $d_3$, $d_4$ are primarily dictated by the characteristics of the imaging system 5 (and to a much less extent by distances $d_1$ and $d_2$). For example, using a single lens with a focal length of typically 20 cm, $d_3$ typically lies in the range of 0 cm to 50 cm, preferably 20 cm to 30 cm, and $d_4$ typically lies in the range of 10 cm to 400 cm, preferably 50 cm to 250 cm. It is noted that with other lenses or lens systems, e.g. with a commercially available long-range microscope lens, completely different values for $d_3$, $d_4$ are possible.

In the shown first embodiment an evaluation unit 24 is provided for evaluating the recorded fringe pattern 2, wherein the evaluation unit 24 can be connected with the CCD camera 7 in a known way, e.g. via cable or wireless. The evaluation unit 24 is adapted for carrying out the following steps c), d), and e) of the method according to the invention:

c) calculating a wrapped phase image 8 by applying a Fast Fourier Transform (FFT) analysis, wherein the FFT analysis comprises filtering the recorded fringe pattern 2 by transforming the recorded fringe pattern 2 into frequency space, selecting a frequency region 21 around a carrying frequency corresponding to a fringe period in the fringe pattern 2, and transforming the selected frequency region 21 back into real space;

d) unwrapping the wrapped phase image 8, particularly by applying a Discrete Cosine Transform (DCT) analysis, yielding a phase image 9;

e) subtracting from the phase image 9 a reference phase image, yielding a relative phase image with phase differences d(p.

In the shown first embodiment, non-exploitable parts of the phase image 9 as well as of the reference phase image are masked before step e). Those non-exploitable parts correspond to areas on the fluid interface 1 covered by the one ore more particles 19, where the fringe pattern 2 cannot be interpreted, in general. For generating an appropriate mask, an image of the fluid interface 1 without fringes is particularly suited, since the shape of the one ore more particles 19 is then particularly well discernible, cf. Fig. 5. Fig. 6 shows a derived mask 23 for a single spherical particle 19 on the imaged area of the fluid interface 1, wherein the black pixels correspond to not defined (double) value and white pixels to one. This mask is multiplied with the respective imaged to be masked.

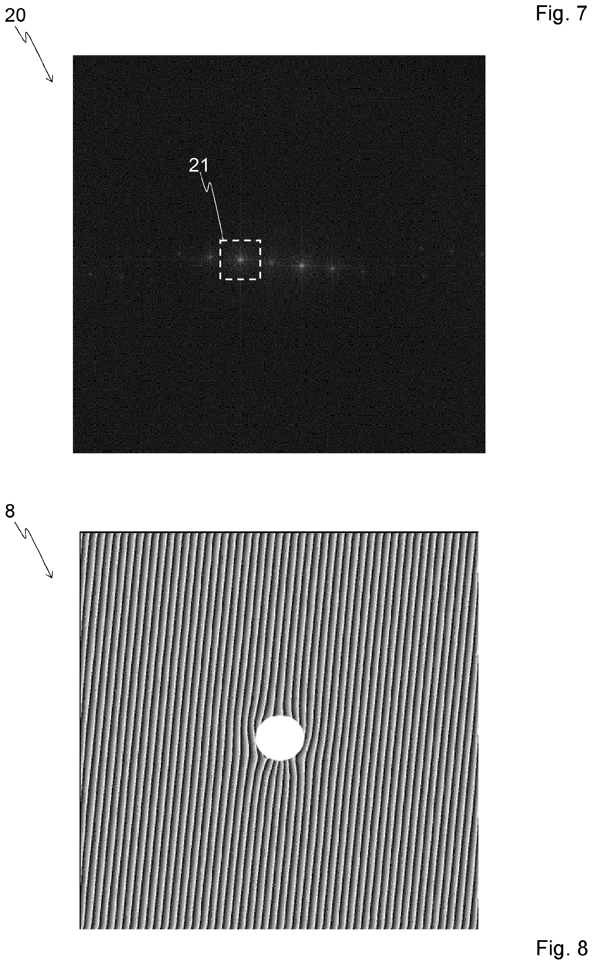

As to step c), Fig. 7 shows the (quad root values of the) Fourier transform 20 of the fringe pattern 2 of Fig. 3. More precisely, the resulting frequency data are complex-valued, wherein Fig. 7 shows the quad-root of the modulus ($|z|^{1/4}$) of the complex amplitudes ($z$), ignoring the complex amplitude of zero frequency which is located in the centre/origin of the visualisation. The dashed square indicates the selected frequency region 21. The resulting wrapped phase image 8 shows the distribution of phase differences between the two beams 3, 4, wherein the phase data is modulo $2\pi$. This is shown in Fig. 8, with the grey scale in Fig. 8 being adjusted accordingly to the interval from 0 to $2\pi$, wherein the mask 23 is already applied to the wrapped phase image 8.

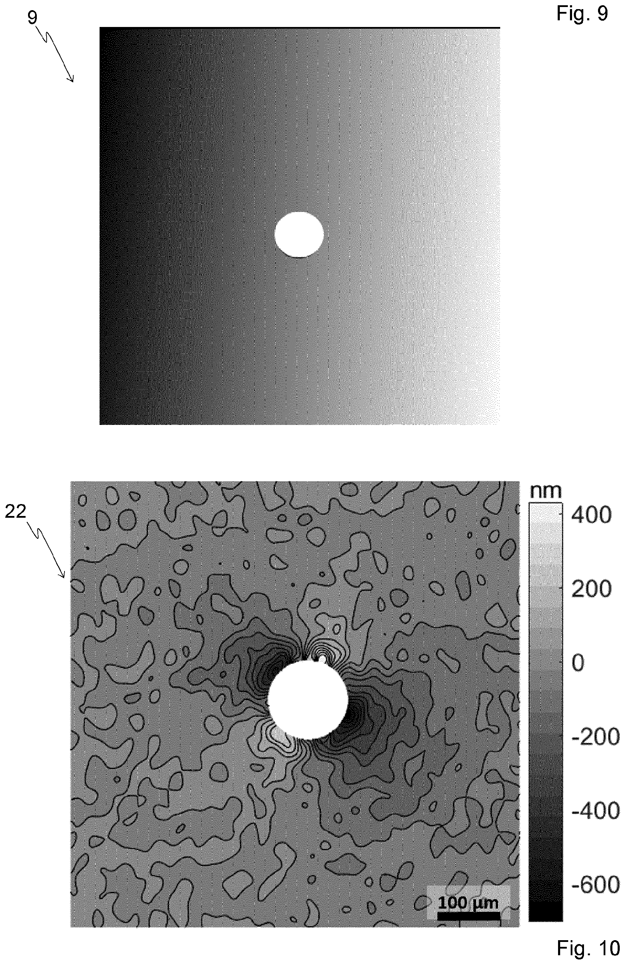

As to step d), Fig. 9 shows the phase image 9 resulting from the unwrapping of the wrapped phase image 8 of Fig. 8.

In the shown first embodiment, the reference phase image (not shown) is a phase image 9 obtained from a fringe pattern 2 recorded with the fluid interface 1 being in an undisturbed state, i.e. without any disturbances like adsorbed particles etc.. This means the reference phase image is derived from a fringe pattern 2 like the one shown in Fig. 4.

The relative phase image obtained by step e) thus provides for a qualitative assessment and visualisation of the deflections, but without absolute height numbers. In order to quantitatively derive the height of the deflections caused by the one or more particles 19, a height variations map 22 is calculated from the relative phase image by taking into account the optical path difference associated with the imaged interface 1. Therein, a phase difference $d\varphi$ of $2\pi$ corresponds to an optical path difference of $\lambda$, the used wavelength of the coherent beams 3, 4, which enables converting the phase differences $d\varphi$ into height deflections. For each pixel the associated height deflection is calculated, wherein in transmission geometry said height deflection is dl_trans = $(\lambda\ d\varphi)/(2\pi\ (n2-n1))$. In the shown first embodiment n1 $\approx$ 1, n2 $\approx$ 1.333, and $\lambda \approx$ 633 nm holds, yielding a height deflection dl_trans of 1.9 $\mu$m for a phase difference of $2\pi$ (corresponding to one period), for example.

The uncertainty of the phase difference calculation is a function of the signal/noise ratio of the FFT (SNR) and is given by $\Delta(d\varphi) = 1/ (SNR)^{0.5}\ ((SNR)^{0.5} + 1)/ ((SNR)^{0.5} - 1)$. Here SNR is obtained by dividing the mean signal level of the FFT in the selected frequency region 21 (around the carrier frequency) by the mean noise level taken outside of the frequency window and frequency region 21, respectively. With the present method, a typical value is SNR=150, and $\Delta(d\varphi)$ $\approx$ 0.1 rad. This is roughly 1.5% of $2\pi$ (a fringe), bringing the vertical resolution of the system to about 1.5% of 1900 nm (= $\lambda\ 2\pi$ / ($2\pi$ (n2-n1)), with 633 nm and n2-n1 $\approx$ 0,333), i.e. about 30 nm in the shown examples. As mentioned above, the lateral resolution depends on the magnification provided by the imaging system 5. In the shown first embodiment, the resulting lateral resolution is 1 $\mu$m per pixel in the not processed image and fringe pattern 2, respectively, leading with the chosen sampling frequency to a lateral resolution of 10 $\mu$m in the phase image 9 and the height variations map 22, respectively.

Fig. 10, Fig. 11, and Fig. 12 exemplarily show resulting height variations maps 22 obtained without recourse to any immobilisation strategy, i.e. while the one or more particles 19 were free to drift along the fluid interface 1 according to local velocity field and their own Brownian motion.

Fig. 10 shows the height variations map 22 for a single spherical particle 19 arranged on the fluid interface 1, wherein a nano coating was applied to the particle 19, in order to adjust its roughness. As can be seen deflections of a few hundred nanometres are obtained, wherein the deflections are negative in one direction (pointing from the left upper corner to the right lower corner of Fig. 10) and positive in another, normal direction (pointing from the left lower corner to the right upper corner of Fig. 10).

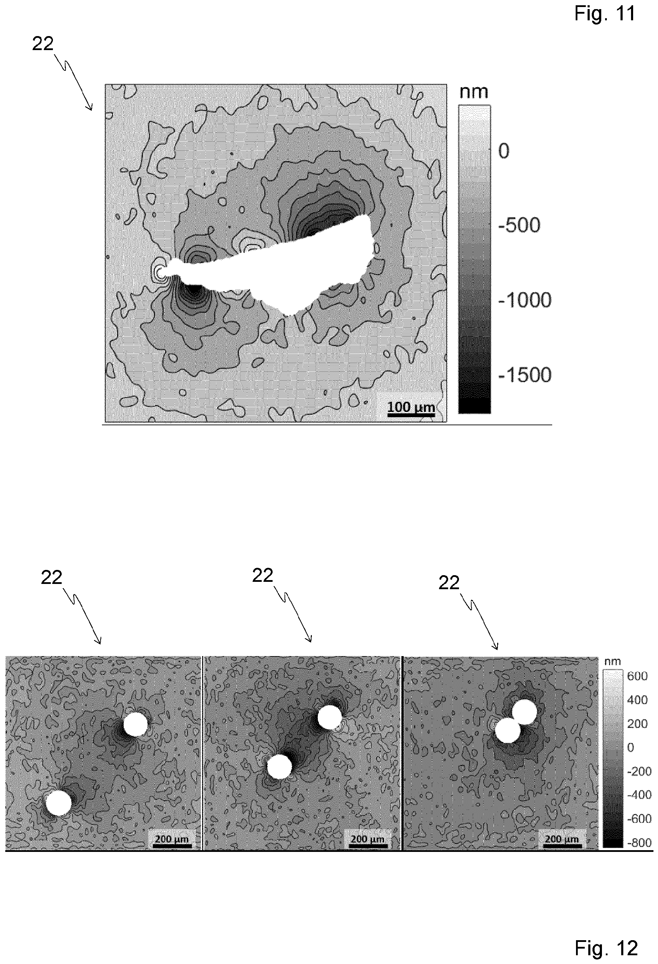

Fig. 11 demonstrates that the method and device according to the present invention are not limited to spherical particles 19, but any particle shape can be resolved. For that purpose, Fig. 11 shows a height variations map 22 obtained for a socalled glass nugget with non-spherical shape arranged on the fluid interface 1.

Dynamics can be accessed by recording time series of fringe patterns 2, wherein the frame rate determines the time resolution. For each of those recorded fringe patterns 2 steps c) to e) are carried out, in order to resolve the temporal evolution of the deflections of the fluid interface 1.

Naturally, also the height variations maps 22 can be calculated for all of those fringe patterns 2.

Fig. 12 demonstrates that by showing three height variations maps 22 of such a time series, illustrating the merging of two 127 $\mu$m spherical, nano coated glass beads on the fluid interface 1. The shown three height variations maps 22 do not correspond to immediately consecutive frames, but to frames having a temporal distance of roughly one second to each other.

The second embodiment shown in Fig. 2 differs from the first embodiment in that instead of a Mach-Zehnder-type interferometer, a Michelson-type interferometer is used. Accordingly, for the description it is referred to the description above, if not explicitly stated differently.

In the second embodiment, the widened laser beam provided by the laser 12 and the beam expander 13 is split by a cube beam splitter 10 in the object beam 3 and the reference beam 4, wherein reference beam 4 is reflected by a mirror M, which is arranged downstream the cube beam splitter 10, back to the cube beam splitter 10. The object beam 3 is either reflected by the fluid interface 1 back to the cube beam splitter 10 (reflexion geometry) or passes through the fluid interface 1 and is then reflected back to the cube beam splitter 10 by mirror M1 (transmission geometry). Hence, the object beam 3, which is affected by the fluid interface 1, and the reference beam 4, which is unaffected by the fluid interface 1, interfere and produce the two-dimensional fringe pattern 2. The latter is digitally recorded by the imaging system 5 focussing on the fluid interface 1, wherein the imaging system 5 is connected to the evaluation unit 24 for carrying out the steps of the method according to the invention, as described above.

It is noted, that in the second embodiment, the water 14 is just arranged in the transparent container 17 made of acrylic glass, without any ring and any window made of a special glass type or having a certain coating for avoiding parasitic reflexions.

List of reference signs

| 1 | Fluid interface |
|---|---|
| 2 | Fringe pattern |
| 3 | Object beam |
| 4 | Reference beam |
| 5 | Imaging system |
| 6 | Lens system |
| 7 | CCD camera |
| 8 | Wrapped phase image |
| 9 | Phase image |
| 10 | Cube beam splitter |
| 11 | Further cube beam splitter |
| 12 | Helium-neon (He-Ne) laser |
| 13 | Beam expander |
| 14 | Water |
| 15 | Air |
| 16 | Window |
| 17 | Container |
| 18 | Ring |
| 19 | Particle |
| 20 | Fourier transform of the fringe pattern |
| 21 | Frequency region |
| 22 | Height variations map |
| 23 | Mask |
| 24 | Evaluation unit |
| M, M1, M2 | Mirror |
| $d_1, d_2, d_3, d_4$ | Distance |

**Claims**

1. Method for determining deflections of a fluid interface (1) between fluid media (14, 15) with two different refractive indices n1, n2,
   the method comprising the following steps:

a) producing a fringe pattern (2) by interference of two coherent beams (3, 4), wherein the two beams are an object beam (3) and a reference beam (4), wherein, in a transmission geometry, the object beam (3) passes through the fluid interface (1) or, in a reflexion geometry, is reflected by the fluid interface (1) before the two beams (3, 4) interfere, wherein the reference beam (4) remains unaffected by the fluid interface (1);

b) digitally recording the fringe pattern (2) by an imaging system (5) focussing on the fluid interface (1);

c) calculating a wrapped phase image (8) by applying a Fast Fourier Transform (FFT) analysis, wherein the FFT analysis comprises filtering the recorded fringe pattern (2) by transforming the recorded fringe pattern (2) into frequency space, selecting a frequency region (21) around a carrying frequency corresponding to a fringe period in the fringe pattern (2), and transforming the selected frequency region (21) back into real space;

d) unwrapping the wrapped phase image (8), particularly by applying a Discrete Cosine Transform (DCT) analysis, yielding a phase image (9);

e) subtracting from the phase image (9) a reference phase image, yielding a relative phase image with phase differences d(p.

2. Method according to claim 1, **characterised in that** if one or more non-exploitable parts are present in the phase image (9), the one or more non-exploitable parts are masked in the phase image (9) and in the reference phase image before step e).

3. Method according to any one of claims 1 to 2, **characterised in that** a height variations map (22) is calculated from the relative phase image by calculating for each pixel a height deflection as

$$\texttt{dl\_trans = (} \lambda \texttt{ d} \varphi \texttt{)/(2} \pi \texttt{ (n2-n1))}$$

for transmission geometry or as

$$\texttt{dl\_ref = (} \lambda \texttt{ d} \varphi \texttt{)/(4} \pi \texttt{ (n2-n1))}$$

for reflexion geometry, with $\lambda$ being the wavelength of the coherent beams (3, 4).

4. Method according to any one of claims 1 to 3, **characterised in that** the reference phase image is another phase image (9) obtained from a fringe pattern (2) recorded at another time or is a phase image (9) obtained from a fringe pattern (2) recorded with the fluid interface (1) being in an undisturbed state.

5. Method according to any one of claims 1 to 4, **characterised in that** in step a) a Mach-Zehnder-type interferometer or a Michelson-type interferometer is used.

6. Method according to any one of claims 1 to 5, **characterised in that** the used imaging system comprises a CCD camera (7).

7. Method according to any one of claims 1 to 6, **characterised in that** for providing the two coherent beams (3, 4) a laser source (12) with a downstream beam expander (13) is used, followed by a beam splitter (10).

8. Method according to any one of claims 1 to 7, **characterised in that** at least one of the fluid media (14, 15) is a liquid (14) which is arranged in a container (17) having a window (16), through which window (16) the object beam (3) passes before going through the liquid (14), wherein the window (16) preferably is made of a material and/or comprises a coating adapted for avoiding reflexions of light with a wavelength of the coherent beams (3, 4).

9. Method according to claim 8, **characterised in that** in the container (17), a ring (18) is arranged around the window (16) for stabilising the liquid (14).

10. Method according to any one of claims 1 to 9, **characterised in that** a time series of fringe patterns (2) is recorded by the imaging system (5), preferably with a rate in the range of 1000 to 10000 frames per second, wherein for each of those fringe patterns (2) steps c) to e) are carried out, in order to resolve the temporal evolution of the deflections of the fluid interface (1).

11. Device for carrying out the method according to any one of claims 1 to 10, the device comprising means (12, 13, 10) for providing the object beam (3) and the reference beam (4),

the device further comprising means (17, 16, 18) for arranging the fluid media (14, 15) with the fluid interface (1) in the path of the object beam (3), allowing, in transmission geometry, passing of the object beam (3) through the fluid interface (1) or, in reflexion geometry, reflecting of the object beam (3) by the fluid interface (1),
the device further comprising the imaging system (5) for digitally recording the fringe pattern (2) while focussing on the fluid interface (1),
and the device further comprising an evaluation unit (24) for carrying out the steps c), d), and e).

Fig. 1

Fig. 2

2

Fig. 3

2

Fig. 4

Fig. 5

23

200 µm

Fig. 6

Fig. 7

20

21

8

Fig. 8

Fig. 9

9

22

nm
400
200
0
-200
-400
-600

100 μm

Fig. 10

Fig. 11

22

Fig. 12

22          22          22

Europäisches
Patentamt
European
Patent Office
Office européen
des brevets

# EUROPEAN SEARCH REPORT

**Application Number**

**EP 23 20 3669**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ARUN ANAND ARUN ANAND ET AL: "Digital holographic microscopy for automated 3D cell identification: an overview (Invited Paper)", CHINESE OPTICS LETTERS, vol. 12, no. 6, 1 January 2014 (2014-01-01), pages 060012-60017, XP93131980, CN ISSN: 1671-7694, DOI: 10.3788/COL201412.060012 Retrieved from the Internet: URL:https://www.researching.cn/ArticlePdf/m00005/2014/12/6/COL201412060012.pdf> | 1,3-7, 10,11 | INV. G01B9/02015 G01B9/02 G01B11/24 |
| Y | * abstract; chapter 2,5; | 2,8 | |
| A | figure 1 * | 9 | |
| Y | S. BARROSO VITOR ET AL: "Multiplexed digital holography for fluid surface profilometry", APPLIED OPTICS, vol. 62, no. 27, 20 September 2023 (2023-09-20), page 7175, XP93131610, US ISSN: 1559-128X, DOI: 10.1364/AO.496937 * chapter 4; fig.2 of supplementary document; figure 1 * | 2,8 | |

-----

-----

-/--

**TECHNICAL FIELDS SEARCHED (IPC)**

G01B

The present search report has been drawn up for all claims

| Place of search | Date of completion of the search | Examiner |
|---|---|---|
| Munich | 15 February 2024 | Biedermann, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt
European
Patent Office
Office européen
des brevets

## EUROPEAN SEARCH REPORT

Application Number

EP 23 20 3669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DINGNAN DENG ET AL: "Off-axis tilt compensation in common-path digital holographic microscopy based on hologram rotation", OPTICS LETTERS, vol. 42, no. 24, 15 December 2017 (2017-12-15), pages 5282-5285, XP055578736, US ISSN: 0146-9592, DOI: 10.1364/OL.42.005282 * figure 1 * | 1-11 | |
| Y | ZIKMUND TOMÁS ET AL: "Dynamical deformation compensation of phase in digital holographic microscopy", 17TH SLOVAK-CZECH-POLISH OPTICAL CONFERENCE ON WAVE AND QUANTUM ASPECTS OF CONTEMPORARY OPTICS, SPIE, 1000 20TH ST. BELLINGHAM WA 98225-6705 USA, vol. 7746, no. 1, 24 September 2010 (2010-09-24), pages 1-7, XP060010615, DOI: 10.1117/12.882171 [retrieved on 1901-01-01] * figure 2 * | 2 | TECHNICAL FIELDS SEARCHED (IPC) |

The present search report has been drawn up for all claims

| Place of search | Date of completion of the search | Examiner |
|---|---|---|
| Munich | 15 February 2024 | Biedermann, Benjamin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

**Non-patent literature cited in the description**

- **LOUDET, J. C.** ; **YODH, A. G.** ; **POULIGNY, B.** Wetting and contact lines of micrometre-sized ellipsoids. *Phys. Rev. Lett.*, 2006, vol. 97, 018304

- **MOISY, F.** ; **RABAUD, M.** ; **SALSAC, K.** A synthetic Schlieren method for the measurement of the topography of a liquid interface. *Exp. Fluids*, 2009, vol. 46, 1021-1036
- **HIPP, M.** ; **WOISETSCHLAGER, J.** ; **REITERER, P.** ; **NEGER, T.** Digital evaluation of interferograms. *Measurement*, 2004, vol. 36 (1), 53-66